# EUROPEAN PATENT APPLICATION

(11) **EP 4 693 339 A1**
(43) Date of publication of application: **11.02.2026**
(21) Application number: 23930381.1
(22) Date of filing: 28.03.2023
(51) Int. Cl.: H01B 1/06

(54) **SOLID ELECTROLYTE AND LITHIUM ION BATTERY**

(71) Applicant: NGK Insulators, Ltd., Nagoya-shi, Aichi 467-8530 (JP)
(72) Inventor: SUTO, Yusaku, Nagoya-shi, Aichi 467-8530 (JP); NISHIZAKI, Tsutomu, Nagoya-shi, Aichi 467-8530 (JP); YOSHIDA, Toshihiro, Nagoya-shi, Aichi 467-8530 (JP)
(74) Representative: Mewburn Ellis LLP
(86) International application number: PCT/JP2023/012625
(87) International publication number: WO 2024/201741

(57) **Abstract**

A solid electrolyte contains Li, Mα, Mβ, Mγ, Cl, and A. Mα is at least one element selected from a group consisting of Zr and Hf. Mβ is at least one element selected from a group consisting of Ta and Nb. Mγ is at least one element selected from a group consisting of Gd, Yb, Dy, Er, Ho, Eu, and Sc. A is at least one type selected from a group consisting of OH⁻, AlO₂⁻, SO₃⁻, SO₄²⁻, SiO₃²⁻, SiO₄⁴⁻, Si₂O₇⁶⁻, CO₃²⁻ PO₄³⁻ P₂O₇⁴⁻, BO₂⁻, BO₃³⁻, PO₃⁻, NO₃⁻, BF₄⁻, PF₆⁻, ClO₄⁻, B(C₂O₄)²⁻, CH₃COO⁻, TFSI⁻, and FSI⁻. This provides the solid electrolyte with excellent resistance to reduction.

## Description

### TECHNICAL FIELD

The present invention relates to a solid electrolyte and a lithium-ion battery.

### BACKGROUND ART

In recent years, there is a strong demand for downsizing and improved reliability (safety) of batteries serving as power sources for electronic equipment. Thus, attention has been placed on all-solid-state batteries using solid electrolytes. Halides are known as solid electrolytes that contain no sulfur, and Li₃YCl₆ exhibits high Li ionic conductivity at ambient temperature (see, for example, Japanese Patent No. 6934626 (Document 1)). International Publication No. 2020/070956 (Document 2) discloses a solid-state halide electrolyte material expressed by Li_{6-4b+ab}(Zr₁₋ₐMₐ)_{b}X₆. Here, M is at least one type of element selected from the group consisting of Al, Ga, Bi, Sc, Sm, and Sb, X is a halogen element, and 0 < a < 1 and 0 < b < 1.5 are satisfied.

As described previously, chloride electrolytes such as Li₃YCl₆ exhibit high ionic conductivity at ambient temperature, but there is no information disclosed about stability. The inventors of the present application have prepared the solid electrolytes disclosed in Documents 1 and 2 described above and left these solid electrolytes at rest in a dry room with a dew point controlled at -40°C. As a result, they have found that the electrolytes were decomposed and could not maintain their initial ionic conductivity, i.e., had low stability (resistance to humidity). In view of this, in order to improve the stability of chloride electrolytes, the inventors of the present application have prepared materials by combining various cations (M) in LiₓMCl₆ and searched for a combination of cations that achieves high stability. As a result, a combination of cations that exhibits high ionic conductivity and high stability has been identified, which will be described later as related technology. On the other hand, solid electrolytes are required to have improved resistance to reduction in order to improve energy density in all-solid-state batteries.

### SUMMARY OF THE INVENTION

The present invention is intended for a solid electrolyte, and it is an object of the present invention to provide a solid electrolyte with excellent resistance to reduction.

Aspect 1 of the present invention is a solid electrolyte that contains Li, Mα, Mβ, Mγ, Cl, and A. Mα is at least one element selected from a group consisting of Zr and Hf. Mβ is at least one element selected from a group consisting of Ta and Nb. Mγ is at least one element selected from a group consisting of Gd, Yb, Dy, Er, Ho, Eu, and Sc. A is at least one type selected from a group consisting of OH⁻, AlO₂⁻, SO₃⁻, SO₄²⁻, SiO₃²⁻, SiO₄⁴⁻, Si₂O₇⁶⁻, CO₃²⁻, PO₄³⁻, P₂O₇⁴⁻, BO₂⁻, BO₃³⁻, PO₃⁻, NO₃⁻, BF₄⁻, PF₆⁻, ClO₄⁻, B(C₂O₄)²⁻, CH₃COO⁻, TFSI⁻, and FSI⁻.

According to the present invention, it is possible to provide the solid electrolyte with excellent resistance to reduction.

Aspect 2 of the present invention is the solid electrolyte according to Aspect 1, in which Mα includes Zr.

Aspect 3 of the present invention is the solid electrolyte according to Aspect 1 or 2, in which Mβ includes Ta.

Aspect 4 of the present invention is the solid electrolyte according to any one of Aspects 1 to 3, in which Mγ includes Gd, Yb, or Er.

Aspect 5 of the present invention is the solid electrolyte according to any one of Aspects 1 to 4, in which A includes SO₄²⁻, CO₃²⁻, PO₄³⁻, BO₂⁻, BO₃³⁻, PO₃⁻, NO₃⁻, or TFSI⁻.

Aspect 6 of the present invention is the solid electrolyte according to any one of Aspects 1 to 5. The solid electrolyte is expressed by Expression (1) below:

Li_{6-(4+a-b)(1+c)}(Mα_{(1-a-b)}MβₐMγ_{b})_{1+c}Cl₆·n(MδₓA_{y}) ... (1),

where 0 < a, 0 < b, a + b < 1, - 0.2 ≤ c ≤ 0.2, 0 < n, 0 < x, and 0 < y are satisfied. Also, s × x = t × y is satisfied, where s is a valence of Mδ and t is a valence of A, and Mδ is at least one element selected from a group consisting of Li, Zr, Hf, Ta, Nb, Gd, Yb, Dy, Er, Ho, Eu, and Sc.

Aspect 7 of the present invention is a lithium-ion battery that includes the solid electrolyte according to any one of Aspects 1 to 6.

These and other objects, features, aspects and advantages of the present invention will become more apparent from the following detailed description of the present invention when taken in conjunction with the accompanying drawings.

### BRIEF DESCRIPTION OF DRAWINGS

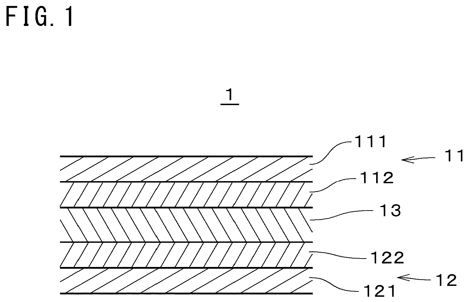

Fig. 1 is a longitudinal sectional view of an all-solid-state lithium-ion secondary battery.

### DESCRIPTION OF EMBODIMENTS

First, a solid electrolyte according to related technology of the present invention will be described. The solid electrolyte according to the related technology is a lithium (Li)-ion conductive material and contains a lithium (Li) element, other three types of metallic (Mα, Mβ, Mγ) elements serving as cations, and a chlorine (Cl) element.

Mα is an element serving as a tetravalent cation and is at least one element selected from the group consisting of zirconium (Zr) and hafnium (Hf). Mβ is an element serving as a pentavalent cation and is at least one element selected from the group consisting of tantalum (Ta) and niobium (Nb). Mγ is an element serving as a trivalent cation and is at least one element selected from the group consisting of gadolinium (Gd), ytterbium (Yb), dysprosium (Dy), erbium (Er), holmium (Ho), europium (Eu), and scandium (Sc). The solid electrolyte that contains at least one type of trivalent element, at least one type of quadrivalent element, and at least one type of pentavalent element as cations, in addition to Li, achieves high ionic conductivity and high stability.

One preferable example of the solid electrolyte according to the related technology is a compound expressed by the following composition formula:

Li_{6-(4+a-b)(1+c)}(Mα_{(1-a-b)}MβₐMγ_{b})_{1+c}Cl₆,

where 0 < a, 0 < b, a + b < 1, and -0.2 ≤ c ≤ 0.2 are satisfied.

Next, a solid electrolyte according to one embodiment of the present invention will be described. The solid electrolyte is a Li-ion conductive material obtained by combining the solid electrolyte according to the related technology described above with metallic salt of an anion which will be described later. For example, the solid electrolyte may be used in the production of an all-solid-state secondary battery. The solid electrolyte contains a Li element, other three types of metallic (Mα, Mβ, Mγ) elements serving as cations, a Cl element, and A serving as an anion. The solid electrolyte may contain only Li, Mα, Mβ, Mγ, Cl, and A.

As in the solid electrolyte according to the related technology described above, Mα is an element serving as a tetravalent cation and is at least one element selected from the group consisting of Zr and Hf. Mβ is an element serving as a pentavalent cation and is at least one element selected from the group consisting of Ta and Nb. Mγ is an element serving as a trivalent cation and is at least one element selected from the group consisting of Gd, Yb, Dy, Er, Ho, Eu, and Sc. The solid electrolyte according to the present embodiment also achieves high ionic conductivity and high stability because it contains at least one type of trivalent element, at least one type of quadrivalent element, and at least one type of pentavalent element as cations, in addition to Li.

The anion A is at least one type selected from the group consisting of OH⁻, AlO₂⁻, SO₃⁻, SO₄²⁻, SiO₃²⁻, SiO₄⁴⁻, Si₂O₇⁶⁻, CO₃²⁻ PO₄³⁻, P₂O₇⁴⁻, BO₂⁻, BO₃³⁻, PO₃⁻, NO₃⁻, BF₄⁻, PF₆⁻, ClO₄⁻, B(C₂O₄)²⁻, CH₃COO⁻, TFSI⁻, and FSI⁻. The anion A is also called a polyanion. As will be described later, the solid electrolyte containing the anion A exhibits high resistance to reduction. A metallic element of the metallic salt of the anion A is at least one element selected from the group consisting of Li, Zr, Hf, Ta, Nb, Gd, Yb, Dy, Er, Ho, Eu, and Sc. The metallic element of the metallic salt may be other elements. Since the anion A is stable even if it includes sulfur (S), the solid electrolyte generates no hydrogen sulfide gases. Accordingly, it is possible to provide the all-solid-state secondary battery with high safety.

In order for the solid electrolyte according to the present embodiment to more reliably achieve high resistance to reduction, Mα preferably contains Zr and may contain only Zr. Mβ preferably contains Ta and may contain only Ta. Mγ preferably contains Gd, Yb, or Er and may contain only Gd, Yb, or Er. Mγ may contain two or more elements selected from among Gd, Yb, and Er. For example, the amount of substance of Li is greater than the amount of substance of any of Mα, Mβ, and Mγ and preferably greater than a total of the amounts of substance of Mα, Mβ, and Mγ. The amount of substance of Cl is, for example, greater than a total of the amounts of substance of Li, Mα, Mβ, and Mγ.

The anion A preferably contains SO₄²⁻, CO₃²⁻, PO₄³⁻, BO₂⁻, BO₃³⁻, PO₃⁻, NO₃⁻, or TFSI⁻and may contain only SO₄²⁻, CO₃²⁻, PO₄³⁻, BO₂⁻, BO₃³⁻, PO₃⁻, NO₃⁻, or TFSI⁻. The anion A may contain two or more types of these anions. For example, the amount of substance of the anion A may be less than the amount of substance of Li.

A preferable solid electrolyte is a compound expressed by Expression (1) below:

Li_{6-(4+a-b)(1+c)}(Mα_{(1-a-b)}MβₐMγ_{b})_{1+c}Cl₆·n(MδₓA_{y}) ... (1),

where 0 < a, 0 < b, a + b < 1, -0.2 ≤ c ≤ 0.2, 0 < n, 0 < x, and 0 <y are satisfied. Also, s × x = t × y is satisfied, where s is the valence of Mδ and t is the valence of A. Moreover, Mδ is at least one element selected from the group consisting of Li, Zr, Hf, Ta, Nb, Gd, Yb, Dy, Er, Ho, Eu, and Sc. Here, a and b may satisfy 0.1 ≤ a ≤ 0.5 and 0.1 ≤ b ≤ 0.4. Alternatively, a and b may satisfy 0.2 ≤ a + b ≤ 0.8. The relationship between a and b may be expressed as a ≥ b, but it may also be expressed as a < b. Here, c may satisfy -0.1 ≤ c ≤ 0.1 or may be zero, and n may satisfy 0 < n ≤ 3 or 0 < n ≤ 2. The solid electrolyte may be either crystalline or amorphous.

In the case of checking whether an unknown solid electrolyte is the solid electrolyte according to the present embodiment, chemical analysis is conducted on the unknown solid electrolyte to check whether Li, Mα, Mβ, Mγ and Cl, and constituent elements of A are constituent elements of the unknown solid electrolyte. To check whether the unknown solid electrolyte is expressed by Expression (1) given above, for example, Li, Mα, Mβ, and Mγ can be quantitated by an ICP emission spectral analysis method or the like. For example, Cl can be quantitated by ion chromatography or the like. For a constituent element of the anion A, a measuring method that allows quantitation of the element is selected as appropriate. For example, O, N, H can be quantitated by ONH analysis using an oxygen/nitrogen/hydrogen analyzer or the like, and F can be quantitated by ion chromatography or the like. For example, C can be quantitated by a carbon/sulfur analyzer (CS measuring device) or the like, and the other elements can be quantitated by an ICP emission spectral analysis method or the like.

The molar ratio of Li, Mα, Mβ, Mγ, Cl, Mδ, and A in Expression (1) given above becomes as follows: Li:Mα:Mβ:Mγ:Cl:Mδ:A = 6-(4+a-b)(1+c):(1-a-b)(1+c):a(1+c):b(1+c):6:nx:ny. If the value of Li in the molar ratio obtained by the analysis conducted on the unknown solid electrolyte is greater than or equal to 0.90× {6-(4+a-b)(1+c)} and less than or equal to 1.10× {6-(4+a-b)(1+c)}, Li is considered to satisfy Expression (1). More preferably, the value of Li is greater than or equal to 0.95× {6-(4+a-b)(1+c)} and less than or equal to 1.05×{6-(4+a-b)(1+c)}. The same also applies to Mα, Mβ, Mγ, Cl, Mδ, and A.

The solid electrolyte according to the present embodiment is produced by, for example, the following method. Firstly, powder of a chloride that contains Li, powder of a chloride that contains Mα, powder of a chloride that contains Mβ, and powder of a chloride that contains Mγ are prepared. A chloride that contains Li may, for example, be LiCl. A chloride that contains Mα may, for example, be MαCl₄. A chloride that contains Mβ may, for example, be MβCl₅. A chloride that contains Mγ may, for example, be MγCl₃. The powder of these chlorides is weighted and mixed together in a predetermined molar ratio.

After a resultant mixture has been prepared, the mixture is subjected to a milling process (mechanochemical milling). In one example of the milling process, a planetary ball mill is used. In the planetary ball mill, a stage with a pot placed thereon revolves while the pot rotates on its axis, so that remarkably high impact energy can be generated. The milling process may also be performed by using any other type of pulverizer. Through the aforementioned milling process, a solid electrolyte that contains Li, Mα, Mβ, Mγ, and Cl is obtained. This solid electrolyte is a solid electrolyte before combining (the solid electrolyte according to the related technology described above). In the following description, synthesis of the solid electrolyte is also referred to as "pre-synthesis". In the present processing example, the milling process is conducted at ordinary temperatures, but conditions such as temperature may be changed as appropriate.

Then, the metallic salt of the anion A and the pre-synthesized solid electrolyte are weighed and mixed together in a predetermined molar ratio. Thereafter, the resultant mixture is subjected to the milling process in the same manner as described above to obtain the solid electrolyte according to the present embodiment. The solid electrolyte is obtained by combining the pre-synthesized solid electrolyte with the metallic salt of the anion. The solid electrolyte is used in the production of a positive electrode layer 112, a negative electrode layer 122, or an electrolyte layer 13 of an all-solid-state secondary battery 1 (see FIG. 1), which will be described later. In the production of the solid electrolyte according to the present embodiment, the pre-synthesis of the solid electrolyte (the solid electrolyte that does not contain the anion A) is not always necessary. Alternatively, the combined solid electrolyte may be produced without pre-synthesis by subjecting a mixture of the metallic salt of the anion A and raw materials (e.g., LiCl, MαCl₄, MβCl₅, and MγCl₃) of the solid-electrolyte in pre-synthesis to the milling process. As another alternative, the solid electrolyte may be produced by any other method such as firing other than the milling process.

Fig. 1 is a longitudinal sectional view of the all-solid-state lithium-ion secondary battery 1 (hereinafter, simply referred to as the "all-solid-state secondary battery 1"). The all-solid-state secondary battery 1 uses the solid electrolyte according to the present embodiment. The all-solid-state secondary battery 1 includes a positive electrode 11, the electrolyte layer 13, and a negative electrode 12 in order from the top of Fig. 1. That is, the electrolyte layer 13 is provided between the positive electrode 11 and the negative electrode 12. The electrolyte layer 13 is a solid-state electrolyte layer and serves also as a separator layer. The electrolyte layer 13 is formed of or contains the solid electrolyte according to the present embodiment. The positive electrode 11 includes a current collector 111 and the positive electrode layer 112. The positive electrode layer 112 contains a positive active material. The negative electrode 12 includes a current collector 121 and the negative electrode layer 122. The negative electrode layer 122 contains a negative active material.

Preferably, the positive active material of the positive electrode layer 112 includes a lithium complex oxide. A preferable positive active material is a lithium complex oxide having a layered rock-salt structure and may, for example, be NCM (Li(Ni, Co, Mn)O₂). The positive active material may also be any other lithium complex oxide, and examples thereof include NCA (Li(Ni, Co, Al)O₂) or LCO (LiCoO₂) having a layered rock-salt structure, LNMO (LiNi_{0.5}Mn_{1.5}O₄) having a spinel structure, and LFP (LiFePO₄) having an olivine structure. In addition to the positive active material, the positive electrode layer 112 further contains the solid electrolyte according to the present embodiment. The positive electrode layer 112 may further contain an electron conductive agent (e.g., carbon black). By way of example, the positive electrode layer 112 may be obtained by integrating those substances together by applying pressure or heat.

Examples of the negative active material of the negative electrode layer 122 include compounds such as LTO (Li₄Ti₅O₁₂), NTO (Nb₂TiO₇), TiO₂ (titanium oxides), graphite, and SiO (silicon monoxide). In addition to the negative active material, the negative electrode layer 122 further contains the solid electrolyte according to the present embodiment. The negative electrode layer 122 may further contain an electron conductive agent (e.g., carbon black). By way of example, the negative electrode layer 122 may be obtained by integrating those substances together by applying pressure or heat. The configurations and materials of the positive electrode 11 and the negative electrode 12 in the all-solid-state secondary battery 1 are not limited to the examples described above, and various other configurations and materials are adoptable.

Next, examples of the solid electrolyte and comparative examples therefor will be described. Table 1 shows the compositions of solid electrolytes according to Examples 1 to 10 and Comparative Example 1 and the results of evaluation therefor. The solid electrolyte according to Comparative Example 1 is the solid electrolyte according to the related technology described above.

**Table 1**

| | Solid Electrolyte | Reduction Onset Potential [V vs. Li] | Quantity of Electricity during Decomposition down to 0.1V [C] |
|---|---|---|---|
| Example 1 | Li_{2.0}Zr_{0.6}Ta_{0.2}Yb_{0.2}Cl₆ • 0.15Li₂SO₄ | 1.42 | 0.107 |
| Example 2 | Li_{2.0}Zr_{0.6}Ta_{0.2}Yb_{0.2}Cl₆ • 0.33Li₂SO₄ | 1.06 | 0.048 |
| Example 3 | Li_{2.0}Zr_{0.6}Ta_{0.2}Yb_{0.2}Cl₆ • Li₂SO₄ | < 0 | 0 |
| Example 4 | Li_{2.0}Zr_{0.6}Ta_{0.2}Yb_{0.2}Cl₆ • Li₂CO₃ | 0.17 | 0.012 |
| Example 5 | Li_{2.0}Zr_{0.6}Ta_{0.2}Yb_{0.2}Cl₆ • Li₃PO₄ | < 0 | 0 |
| Example 6 | Li_{2.0}Zr_{0.6}Ta_{0.2}Yb_{0.2}Cl₆ • Li₃BO₃ | < 0 | 0 |
| Example 7 | Li_{2.0}Zr_{0.6}Ta_{0.2}Yb_{0.2}Cl₆ • LiPO₃ | 0.28 | 0.010 |
| Example 8 | Li_{2.0}Zr_{0.6}Ta_{0.2}Yb_{0.2}Cl₆ • LiBO₂ | < 0 | 0 |
| Example 9 | Li_{2.0}Zr_{0.6}Ta_{0.2}Yb_{0.2}Cl₆ • LiNO₃ | < 0 | 0 |
| Example 10 | Li_{2.0}Zr_{0.6}Ta_{0.2}Yb_{0.2}Cl₆ • 0.5LiTFSI | 0.07 | 0 |
| Comparative Example 1 | Li_{2.0}Zr_{0.6} Ta_{0.2}Yb_{0.2}Cl₆ | 1.47 | 0.151 |

### Example 1

### Pre-synthesis of Electrolyte

In an argon atmosphere with a dew point of -60°C or lower, LiCl, ZrCl₄, TaCl₅, and YbCl₃ serving as raw powder were weighed in a molar ratio LiCl:ZrCl₄:TaCl₅:YbCl₃ of 2.0:0.6:0.2:0.2, and the raw powder of these substances was pulverized and mixed together in a mortar. Resultant mixed powder was poured into a zirconia pot and milled at 300 rpm for 20 hours (h) by using a planetary ball mill to pre-synthesize a chloride solid electrolyte.

### Combining with Li Salt Containing Polyanion

In an argon atmosphere with a dew point of -60°C or lower, the pre-synthesized solid electrolyte described above and Li₂SO₄ were weighed in a molar ratio of 1:0.15 and pulverized and mixed together in a mortar. Resultant mixed powder was poured into a zirconia pot and milled at 300 rpm for 20 hours by using a planetary ball mill to obtain a solid electrolyte that contains a polyanion.

### Evaluation of Reduction Stability

The solid electrolyte powder was poured into a mold made from a resinous sleeve and upper and lower SUS (stainless steel) punches and was uniaxially press-molded by the application of pressure at 150 MPa. Thereafter, the lower punch was taken out, the surface of a powder compact was coated with Li metallic foil, and the lower punch was inserted again and pressed by the application of pressure at 50 MPa. Then, conductors were respectively connected to the upper and lower punches, and cyclic voltammetry measurement was conducted at ambient temperature.

In the cyclic voltammetry measurement, a working electrode was scanned from an OCV (open circuit voltage) during cell construction to -1.0V (vs. Li) in a reduction direction at a scanning speed of 1 mV/sec. To quantitate stability under the reduction potential, a potential at which the reduction current on the working electrode per unit area exceeded -20 µA/cm² during scanning from the OCV in the reduction direction was defined as a reduction onset potential. Table 1 shows the obtained value in the "Reduction Onset Potential" column.

In the evaluation of reduction stability, the quantity of electricity generated by reduction decomposition was computed. Using the operating potential (0.1V vs. Li) of graphite commonly used as the negative active material of a lithium-ion battery as a reference, stability under the potential of the negative electrode was quantitatively evaluated by computing the quantity of electricity (in units of coulomb [C]) obtained by summation of the reduction current that had flowed from the aforementioned reduction onset potential to 0.1V. Table 1 shows the obtained value in the "Quantity of Electricity during Decomposition down to 0.1V" column.

### Example 2

The electrolyte was prepared, tested, and evaluated in the same manner as in Example 1 described above, except that in the preparation of the electrolyte according to Example 1, the pre-synthesized solid electrolyte and Li₂SO₄ were weighed in a molar ratio of 1:0.33 in the process of combining with the Li salt containing a polyanion.

### Example 3

The electrolyte was prepared, tested, and evaluated in the same manner as in Example 1 described above, except that in the preparation of the electrolyte according to Example 1, the pre-synthesized solid electrolyte and Li₂SO₄ were weighed in a molar ratio of 1:1 in the process of combining with the Li salt containing a polyanion.

### Example 4

The electrolyte was prepared, tested, and evaluated in the same manner as in Example 1 described above, except that in the preparation of the electrolyte according to Example 1, the pre-synthesized solid electrolyte and Li₂CO₃ were weighed in a molar ratio of 1:1 in the process of combining with the Li salt containing a polyanion.

### Example 5

The electrolyte was prepared, tested, and evaluated in the same manner as in Example 1 described above, except that in the preparation of the electrolyte according to Example 1, the pre-synthesized solid electrolyte and Li₃PO₄ were weighed in a molar ratio of 1:1 in the process of combining with the Li salt containing a polyanion.

### Example 6

The electrolyte was prepared, tested, and evaluated in the same manner as in Example 1 described above, except that in the preparation of the electrolyte according to Example 1, the pre-synthesized solid electrolyte and Li₃BO₃ were weighed in a molar ratio of 1:1 in the process of combining with the Li salt containing a polyanion.

### Example 7

The electrolyte was prepared, tested, and evaluated in the same manner as in Example 1 described above, except that in the preparation of the electrolyte according to Example 1, the pre-synthesized solid electrolyte and LiPO₃ were weighed in a molar ratio of 1:1 in the process of combining with the Li salt containing a polyanion.

### Example 8

The electrolyte was prepared, tested, and evaluated in the same manner as in Example 1 described above, except that in the preparation of the electrolyte according to Example 1, the pre-synthesized solid electrolyte and LiBO₂ were weighed in a molar ratio of 1:1 in the process of combining with the Li salt containing a polyanion.

### Example 9

The electrolyte was prepared, tested, and evaluated in the same manner as in Example 1 described above, except that in the preparation of the electrolyte according to Example 1, the pre-synthesized solid electrolyte and LiNO₃ were weighed in a molar ratio of 1:1 in the process of combining with the Li salt containing a polyanion.

### Example 10

The electrolyte was prepared, tested, and evaluated in the same manner as in Example 1 described above, except that in the preparation of the electrolyte according to Example 1, the pre-synthesized solid electrolyte and LiTFS1 were weighed in a molar ratio of 1:0.5 in the process of combining with the Li salt containing a polyanion.

### Comparative Example 1

The combining with the Li salt containing a polyanion was omitted, and the pre-synthesized solid electrolyte was tested and evaluated.

As shown in Table 1, the solid electrolytes according to Examples 1 to 10 that were obtained by combining the pre-synthesized solid electrolyte with (the metallic salt of) a polyanion had a lower reduction onset potential than the solid electrolyte according to Comparative Example 1 that was obtained without combining, and exhibited a decrease in the quantity of electricity during decomposition down to 0.1 V. In this way, it has been confirmed that the combination of the pre-synthesized solid electrolyte with a polyanion suppresses a reduction decomposition reaction of the solid electrolyte and improves the resistance to reduction.

The reason why the combined solid electrolyte has improved resistance to reduction is not clear, but the combination with a polyanion disrupts the crystal structure of the pre-synthesized solid electrolyte and progresses amorphization of the solid electrolyte. It is thought that the disruption of the crystal structure allows the cations to interact with not only Cl but also the polyanion, resulting in an improvement in stability. This structural change is assumed to contribute to an improvement in the resistance to reduction.

Examples 1 to 3 that used the same type of polyanion had different ratios of the amount of substance of the metallic salt of the polyanion to the amount of substance of the pre-synthesized solid electrolyte, and it has confirmed that the resistance to reduction tends to increase as the ratio increases. Therefore, the ratio is preferably higher than or equal to 0.33 and more preferably higher than or equal to 0.5. The ratio may also be higher than or equal to 1, and it is thought that the amount of polyanion added is effective in improving the resistance to reduction over a wide range. From the viewpoint of improving the resistance to reduction, there are no particular limitations on the upper limit for the ratio, but from the viewpoint of favorably maintaining the properties of the pre-synthesized solid electrolyte, the ratio is, for example, lower than or equal to 3 and preferably lower than or equal to 2.

The mechanism for improving the resistance to reduction is considered to remain the same, regardless of the polyanion type. Therefore, it is thought that the resistance to reduction also improves when any of OH⁻, AlO₂⁻, SO₃⁻, SiO₃²⁻, SiO₄⁴⁻, Si₂O₇⁶⁻, P₂O₇⁴⁻, BF₄⁻, PF₆⁻, ClO₄⁻, B(C₂O₄)²⁻, CH₃COO⁻, and FSI⁻ is used as a polyanion.

In the pre-synthesized solid electrolyte, it is also thought that the combination with a polyanion improves the resistance to reduction even if Hf serving as a quadrivalent cation like Zr is used instead of or together with Zr. The same also applies to the case where Nb that serves as a pentavalent cation like Ta and that has the same ionic radius as Ta is used instead of or together with Ta. The same yet also applies to the case where Gd, Dy, Er, Ho, Eu, and Sc that serve as trivalent cations like Yb and that have ionic radii approximate to that of Yb are used instead of or together with Yb.

As described thus far, the solid electrolyte according to the present embodiment contains Li, Mα, Mβ, Mγ, Cl and A. Mα is at least one element selected from the group consisting of Zr and Hf. Mβ is at least one element selected from the group consisting of Ta and Nb. Mγ is at least one element selected from the group consisting of Gd, Yb, Dy, Er, Ho, Eu, and Sc. A is at least one type selected from the group consisting of OH⁻, AlO₂⁻, SO₃⁻, SO₄²⁻, SiO₃²⁻, SiO₄⁴⁻, Si₂O₇⁶⁻, CO₃²⁻, PO₄³⁻, P₂O₇⁴⁻, BO₂⁻, BO₃³⁻, PO₃⁻, NO₃⁻, BF₄⁻, PF₆⁻, ClO₄⁻, B(C₂O₄)²⁻, CH₃COO⁻, TFSI⁻, and FSI⁻. By optimizing the types and combination of Mα, Mβ, Mγ, and A, it is possible to realize the solid electrolyte with excellent resistance to reduction. Since the solid electrolyte has a wide potential window, restrictions on the operating voltage can be relaxed when the solid electrolyte is applied to the all-solid-state secondary battery 1, and it is possible to improve the energy density of the all-solid-state secondary battery 1.

Preferably, A includes SO₄²⁻, CO₃²⁻, PO₄³⁻, BO₂⁻, BO₃³⁻, PO₃⁻, NO₃⁻, or TFSI⁻. This more reliably improves the resistance of the solid electrolyte to reduction.

A preferable solid electrolyte is expressed by the following expression (1):

Li_{6-(4+a-b)(1+c)}(Mα_{(1-a-b)}MβₐMγ_{b})_{1+c}Cl₆·n(MδₓA_{y}) ... (1),

where 0 < a, 0 < b, a + b < 1, -0.2 ≤ c ≤ 0.2, 0 < n, 0 < x, and 0 < y are satisfied, and s × x = t × y is satisfied, where s is the valence of Mδ and t is the valence of A. Besides, Mδ is at least one element selected from the group consisting of Li, Zr, Hf, Ta, Nb, Gd, Yb, Dy, Er, Ho, Eu, and Sc. This more reliably achieves the solid electrolyte with excellent resistance to reduction.

The solid electrolyte and the all-solid-state secondary battery 1 described above may be modified in various ways.

The solid electrolyte containing Li, Mα, Mβ, Mγ, Cl, and A may not satisfy the expression (1) given above.

The solid electrolyte may be mixed with a different substance (which may include Li) and used as an electrolyte material. In this case, it is preferable that the solid electrolyte is the component with a highest mass ratio, i.e., the main component, among all components contained in the electrolyte material. The mass ratio of the main component in the electrolyte material is preferably higher than or equal to 50% by mass, more preferably higher than or equal to 60% by mass, and yet more preferably higher than or equal to 70% by mass.

The solid electrolyte used in the all-solid-state secondary battery 1 does not necessarily have to be included in all of the positive electrode 11, the negative electrode 12, and the electrolyte layer 13, and may be included in at least one of the positive electrode 11, the negative electrode 12, and the electrolyte layer 13. The solid electrolyte may also be used in any battery other than the all-solid-state secondary battery, and may be used in applications other than batteries.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all-solid-state lithium-ion secondary battery
- 11: positive electrode
- 12: negative electrode
- 13: electrolyte layer

## Claims

1. A solid electrolyte comprising:
Li, Mα, Mβ, Mγ, Cl, and A,
wherein Mα is at least one element selected from a group consisting of Zr and Hf,
Mβ is at least one element selected from a group consisting of Ta and Nb,
Mγ is at least one element selected from a group consisting of Gd, Yb, Dy, Er, Ho, Eu, and Sc, and
A is at least one type selected from a group consisting of OH⁻, AlO₂⁻, SO₃⁻, SO₄²⁻, SiO₃²⁻, SiO₄⁴⁻, Si₂O₇⁶⁻, CO₃²⁻, PO₄³⁻, P₂O₇⁴⁻, BO₂⁻, BO₃³⁻, PO₃⁻, NO₃⁻, BF₄⁻, PF₆⁻, ClO₄⁻, B(C₂O₄)²⁻, CH₃COO⁻, TFSI⁻, and FSI⁻.

2. The solid electrolyte according to claim 1, wherein
Mα includes Zr.

3. The solid electrolyte according to claim 1, wherein
Mβ includes Ta.

4. The solid electrolyte according to claim 1, wherein
Mγ includes Gd, Yb, or Er.

5. The solid electrolyte according to claim 1, wherein
A includes SO₄²⁻, CO₃²⁻, PO₄³⁻, BO₂⁻, BO₃³⁻, PO₃⁻, NO₃⁻, or TFSI⁻.

6. The solid electrolyte according to claim 1,
the solid electrolyte being expressed by Expression (1) below:
Li_{6-(4+a-b)(1+c})(Mα_{(1-a-b)}MβₐMγ_{b})_{1+c}Cl₆·n(MδₓA_{y}) ... (1),
where 0 < a, 0 < b, a + b < 1, - 0.2 ≤ c ≤ 0.2, 0 < n, 0 < x, and 0 < y are satisfied,
wherein s × x = t × y is satisfied, where s is a valence of Mδ and t is a valence of A, and
Mδ is at least one element selected from a group consisting of Li, Zr, Hf, Ta, Nb, Gd, Yb, Dy, Er, Ho, Eu, and Sc.

7. A lithium-ion battery comprising:
the solid electrolyte according to any one of claims 1 to 6.
